# EUROPÄISCHE PATENTSCHRIFT

(11) **EP 2 925 933 B1**
(45) Veröffentlichungstag und Bekanntmachung des Hinweises auf die Patenterteilung: **08.02.2017**
(21) Anmeldenummer: 13788957.2
(22) Anmeldetag: 06.11.2013
(51) Int. Cl.: E01F 9/50

(54) **NEUARTIGE STRASSENMARKIERUNGEN ZUR UNTERSTÜTZUNG DER UMFELDWAHRNEHMUNG VON FAHRZEUGEN**
NOVEL ROAD MARKINGS TO ASSIST THE RECOGNITION OF VEHICLE ENVIRONMENTS
NOUVEAU MARQUAGE ROUTIER DESTINÉ À FAVORISER LA PERCEPTION DE L'ENVIRONNEMENT PAR LES VÉHICULES

(30) Priorität: 28.11.2012 EP 12194578
(43) Veröffentlichungstag der Anmeldung: 07.10.2015
(73) Patentinhaber: Evonik Röhm GmbH, 64293 Darmstadt (DE)
(72) Erfinder: PROTZMANN, Guido, 64625 Bensheim (DE); KIWITT, Jörn, 48143 Münster (DE); KIEFER, Dominik, 76327 Pfinztal (DE); SCHMITT, Günter, 64291 Darmstadt (DE); KAUFMANN, Marita, 64347 Griesheim (DE); OLAPOJU, Michael, 65203 Wiesbaden (DE)
(86) Internationale Anmeldenummer: PCT/EP2013/073091
(87) Internationale Veröffentlichungsnummer: WO 2014/082821

(56) Entgegenhaltungen:
- EP-A1- 1 460 180
- WO-A1-00/09811
- WO-A1-96/16231

## Beschreibung

### Gebiet der Erfindung

Die vorliegende Erfindung umfasst ein neuartiges Konzept zur Markierung von Fahrbahnen, insbesondere von Straßen. Dabei weisen diese neuen Markierungen gegenüber dem Stand der Technik vergleichbare Applizierbarkeit und Lebensdauer auf. Die Markierungen haben auch in Bezug auf die Nachtsichtbarkeit, die Dauer bis zur Wiederbefahrbarkeit und die Oberflächenbeschaffenheit vergleichbare Eigenschaften zum Stand der Technik. Zusätzlich tragen die Markierungen der vorliegenden Erfindung jedoch dazu bei, dass mit ihrer Hilfe Fahrerassistenzsysteme und autonome Fahrzeuge unterstützt werden können. Dazu betrifft die vorliegende Erfindung insbesondere Straßenmarkierungen, die aufbauend auf etablierten Systemen mit zusätzlicher Reflexionsfähigkeit für elektromagnetische Strahlung, insbesondere für Mikrowellen und/oder Infrarotstrahlung ausgestattet sind.

### Stand der Technik

Fahrerassistenzsysteme (FAS) sind schon länger im Fokus der Automobilentwicklung. Die Systeme erhöhen den Fahrkomfort und die Verkehrssicherheit. Aktuelle Systeme sind zum Beispiel der Abstandstempomat, der Notbremsassistent, die Einparkhilfe und der Spurwechselassistent. Zur Umfeldwahrnehmung werden meist Radar-, Infrarot-, Lidar-, Kamera- und/oder Ultraschallsensoren verwendet.

Viele Fahrerassistenzsysteme, wie beispielsweise Spurhalteassistenten, benötigen zuverlässige Informationen bezüglich der Fahrbahn wie beispielsweise Spurbreite, Anzahl der Spuren und Streckenverlauf. Außerdem muss die Fahrzeugposition relativ zur Fahrbahn bekannt sein. Das zuverlässige Ermitteln dieser Daten ist vor allem im Hinblick auf die Zukunftsvision "Autonomes Fahren" von besonders großer Wichtigkeit.

Die Informationen bezüglich der statischen Fahrzeugumgebung können in Form einer abgespeicherten Karte vorliegen. Es muss lediglich eine Positionierung innerhalb der Karte vorgenommen werden. Die Lokalisierung kann beispielsweise mit einem Globalen Navigationssatellitensystem (GNSS) wie GPS oder Galileo durchgeführt werden. Nachteilig ist dabei, dass die Lokalisierungsgenauigkeit nicht ausreicht, um einen zuverlässigen Betrieb von Fahrerassistenzsystemen und autonomen Fahrzeugen zu garantieren. Eine genauere Lokalisierung kann mit einem lokalen, funkbasierten oder optischen Lokalisierungssystem entlang der Fahrbahn erzielt werden. Der Aufbau dieser Infrastruktur ist jedoch aufwändig und kostenintensiv.
Bei dem Verfahren mit einer abgespeicherten Karte ist zusätzlich nachteilig, dass die Karte exakt der Realität entsprechen muss. Dies kann durch temporäre Störungen oder Veränderungen im Fahrbahnverlauf wie zum Beispiel Baustellen nicht garantiert werden.

Aus den genannten Gründen ist es für FAS und autonome Fahrzeuge essentiell, präzise Informationen bzgl. der Fahrbahn/Fahrspur und der dazu relativen Eigenposition während der Fahrt zuverlässig zu ermitteln.

Derzeit wird diese Aufgabe fast ausschließlich mit Videokameras gelöst, die meist hinter der Windschutzscheibe am Rückspiegel montiert sind. Mit Hilfe von digitaler Bildverarbeitung werden im Videobild die Fahrspuren detektiert. Die Fahrspuren werden dabei primär anhand der Fahrbahnmarkierungen erkannt.

Die Systeme können die Fahrspuren allerdings nicht in allen Situationen zuverlässig erkennen. Probleme treten in Baustellen auf, wenn temporäre Fahrbahnmarkierungen zum Einsatz kommen. Das optische Messverfahren stößt auch bei widrigen Witterungsverhältnissen wie Nebel, Regen und Schnee an seine Grenzen. Schwierigkeiten treten zusätzlich bei flach stehender und damit blendender Sonne auf. Bei mangelndem Kontrast zwischen Fahrbahnmarkierungen und Fahrbahnbelag, sowie bei erodierten oder gar nicht vorhandenen Fahrbahnmarkierungen kann die Fahrspur teilweise gar nicht erkannt werden. Außerdem können Teerfugen auf der Fahrbahn zu Fehlinterpretationen bei der Spurerkennung führen.

Aus den genannten Gründen besteht die Notwendigkeit, dass Fahrbahnmarkierungen von Fahrerassistenzsystemen und autonomen Fahrzeugen verlässlicher erkannt werden können. Fahrbahnmarkierungen die den Anforderungen automobiler Systeme zur Umfeldwahrnehmung angepasst sind, sind bis dato noch nicht im Stand der Technik beschrieben.

Es gibt verschiedene Arten von Straßenmarkierungen.
Als Fahrbahnmarkierungsmaterialien werden zurzeit Systeme wie Lösungsmittel basierte Farben, Wasserfarben, thermoplastische Farben, Farben auf Basis von Reaktionsharzen bzw. Kaltplastiken sowie vorgefertigte Klebebänder eingesetzt. Letztere haben den Nachteil, dass sie aufwändig herzustellen und zu applizieren sind. Auch gibt es in Hinblick auf eine anzustrebende Langlebigkeit der Markierung nur eingeschränkte Freiheitsgrade bezüglich der Ausgestaltung der Markierung, z.B. mit Glasperlen.

Lösungsmittel basierte Farben sind ein sehr alter Stand der Technik und weisen den besonderen Nachteil auf, dass diese zum Beispiel nicht mit Glasperlen zur Verbesserung der Reflexion von Licht ausgestattet werden können.

Markierungsfolien, insbesondere solche mit Glasperlen auf der Oberfläche zur Verbesserung der Nachtsichtbarkeit sind beispielsweise in WO 99/04099 und WO 99/04097 beschrieben. In diesen Schriften ist auch ein entsprechendes Verfahren zur Herstellung der Markierungsfolien und zur Ausrüstung dieser Folien mit Glasperlen offenbart.

Reaktionsharz basierte Straßenmarkierungen finden sich beispielsweise in den Patentanmeldungen EP 2 054 453, EP 2 454 331, EP 2 528 967, WO 2012/100879 und WO 2012/146438.

Wässrige Markierungssysteme sind beispielsweise in EP 2 077 305, EP 1 162 237 und US 4,487,964 beschrieben.

### Aufgabe

Aufgabe der vorliegenden Erfindung ist die Bereitstellung eines neuen Konzepts zur Straßenmarkierung, das einen Beitrag zur Umfeldwahrnehmung von Fahrzeugen leistet.

Aufgabe der vorliegenden Erfindung ist insbesondere die Bereitstellung einer neuen Straßenmarkierung, die, insbesondere an der Oberfläche, Mikrowellen und/oder Infrarotstrahlung reflektiert.

Aufgabe der vorliegenden Erfindung ist darüber hinaus, dass diese Straßenmarkierung einfach zu applizieren ist und über eine lange Lebensdauer verfügt.

Eine besondere Aufgabe besteht darin, dass diese neuartigen Straßenmarkierungen durch Modifikation etablierter Systeme zur Verfügung gestellt werden und damit mit bereits vorhandenen Methoden, ohne zusätzliche Umrüstung der entsprechenden Maschinen, verlegt bzw. appliziert werden können.

Weitere nicht explizit genannte Aufgaben ergeben sich aus dem Gesamtzusammenhang der nachfolgenden Beschreibung, Ansprüche und Beispiele.

### Lösung

Die Aufgaben werden gelöst durch eine neuartige, strahlenreflektierende Straßenmarkierung, welche Metallpartikel mit einem Durchmesser zwischen 10 µm und 1 cm, bevorzugt zwischen 0,1 mm und 5 mm und besonders bevorzugt zwischen 0,5 und 2,5 mm aufweist.

Diese Metallpartikel reflektieren elektromagnetische Strahlung, die zum Beispiel durch eine entsprechende Vorrichtung an einem Fahrzeug abgestrahlt wird. Gleichzeitig kann das Fahrzeug mit einem entsprechenden Detektor ausgestattet sein, der die reflektierte Strahlung detektiert. Auf diese Weise können Informationen zur Steuerung des Fahrzeugs direkt auf der Straßenoberfläche, an der Straßenmarkierung abgelesen werden. Bei der genannten elektromagnetischen Strahlung kann es sich beispielsweise um sichtbares Licht handeln. Bevorzugt handelt es sich bei der elektromagnetischen Strahlung um Mikrowellen- und/oder Infrarotstrahlung, ganz besonders bevorzugt in einem Frequenzbereich zwischen 3 GHz und 300 GHz. Dabei handelt es sich insbesondere um Zentimeter- und Millimeterwellen. Aktuelle automobile Radarsensoren arbeiten insbesondere in einem Frequenzband um ca. 24 GHz. Es gibt aber auch Systeme die in Frequenzbändern zwischen 77 und 81 GHz detektieren. Neuere Systeme können auch in einem Bereich um die 120 GHz verwendet werden.

Unter Metall, aus dem die erfindungsgemäß eingesetzten Metallpartikel bestehen, wird erfindungsgemäß ein elementares Metall und keine Metallverbindung wie ein Metalloxid verstanden. Sehr wohl sind unter den Metalpartikeln jedoch auch Partikel zu verstehen, die überwiegend aus einem elementaren Metall mit einer äußeren Passivierungs-, insbesondere einer äußeren Oxidschicht bestehen. Zumeist ergibt sich eine solche Oxidschicht bei der Herstellung oder bildet sich, wie z.B. im Falle von Aluminium, zwangsläufig. Besonders bevorzugt handelt es sich bei den Metallpartikeln um Partikel, die ganz oder teilweise aus Aluminium, Zink, Magnesium oder einer Legierung, die überwiegend, d.h. zu mindestens 50 Gew%, bevorzugt zu mindestens 70 Gew% Magnesium, Aluminium oder Zink enthält, bestehen. Insbesondere bevorzugt sind Partikel, die ganz oder teilweise aus Aluminium bestehen. Weiterhin wären auch Eisenpartikel geeignet. Es können aber auch verschiedene Materialien miteinander kombiniert werden. Dies kann z.B. derart erfolgen, dass mehr als eine Sorte Metallpartikel verwendet wird.

In der einfachsten Ausführungsform der Erfindung handelt es sich um solide Metallpartikel, d.h. Partikel, die ganz aus dem Metall bestehen. Die Erfindung ist jedoch nicht auf solche Partikel beschränkt. So können auch metallische Hohlkugeln zum Einsatz kommen. Weiterhin kann die Oberfläche des Partikels mit dem Metall beschichtet sein, während sich darunter ein anderes Material wie z.B. Glas oder ein Kunststoff befinden. In einer besonderen Ausführungsform der Erfindung handelt es sich um ein mit Glas, PMMA oder Polycarbonat beschichtetes Metall, besonders bevorzugt in Kugelform. Partikel dieser letzten Ausführungsform tragen dabei nicht nur zur Reflexion der genannten elektromagnetischen Strahlung, also insbesondere von Mikrowellen und/oder Infrarotstrahlung, bei, sondern reflektieren zusätzlich sichtbares Licht sehr gut. Dadurch kann, wenn sich die Partikel auf der Oberfläche der Straßenmarkierung befinden, zusätzlich noch die Reflexion von sichtbarem Licht gewährleistet werden. Letztere ist besonders nachts von Bedeutung und wird gemäß Stand der Technik bis dato überwiegend durch reine Glasperlen erreicht.

Die erfindungsgemäß verwendeten Metallpartikel können in verschiedenen Formen vorliegen. So sind diese bevorzugt kugelförmig. Es können aber beispielsweise auch ovale oder tripelspiegelförmige Partikel oder Flakes verwendet werden. Weiterhin können beispielsweise Partikel Verwendung finden, die eine nicht glatte Form bei eine rundlichen Grundform aufweisen. Der Durchmesser betrifft erfindungsgemäß die breiteste Stelle des Partikels. So wird der Durchmesser bei einem ovalen Partikel zwischen den beiden Punkten gemessen, die am weitesten von einander entfernt sind. Die Angabe des Durchmessers bezieht sich dabei auf das Zahlenmittel. Der Durchmesser dieser Partikel kann beispielsweise mikroskopisch ausgemessen werden.

Die Partikel können einfach in das Matrixmaterial der Straßenmarkierung eingebettet sein. Auch wenn die Metallpartikel komplett von diesem Matrixmaterial umschlossen sind, ist eine Reflexion z.B. von Mikrowellen noch möglich.

Alternativ befinden sich die Metallpartikel auf der Oberfläche der Straßenmarkierung. Insbesondere in einer solchen Ausführungsform - jedoch auch bei einer vollständigen Einbettung - ist es bevorzugt, wenn zusätzlich Haftvermittler verwendet werden, um die Haftung der Metallpartikel an das Material der Straßenmarkierung zu verbessern.

Hierzu gibt es zwei alternative Ausführungsformen. In der ersten sind die Metallpartikel auf der Oberfläche mit einem Haftvermittler versehen. In der zweiten Ausführungsform enthält das Matrixmaterial der Straßenmarkierung den Haftvermittler.

Als Haftvermittler kommt eine Reihe von Substanzen in Frage. Die Auswahl des Haftvermittlers ergibt sich für den Fachmann in jedem konkreten Fall insbesondere aus der Wahl des Matrixmaterials und des verwendeten Metalls. Beispiele für solche Haftvermittler sind Silane, Hydroxyester, Aminoester, Urethane, Isocyanate und/oder mit (Meth)acrylaten copolymerisierbare Säuren. Bei den Silanen kann es sich beispielsweise um eine Silanisierung der - z.B. oxidischen - Glas- oder Metalloberfläche handeln. Es kann aber zum Beispiel auch ein Alkoxy- und/oder Hydroxysilylalkyl(meth)acrylat, wie es zum Beispiel von der Firma Evonik Industries AG unter dem Namen Dynasylan^{®} MEMO vertrieben wird, verwendet werden. Ein Beispiel für einen Hydroxyester ist Hydroxyethylmethacrylat. Beispiele für eine copolymerisierbare Säure sind Itaconsäure, Maleinsäure, Methacrylsäure, Acrylsäure, ß-Carboxy-ethyl-acrylat oder die entsprechenden Anhydride. Ein Aminoester ist z.B. N-Dimethylaminopropylmethacrylamid.

Die Menge der eingesetzten Metallpartikel kann relativ variabel gewählt werden. Der limitierende Faktor bezüglich der Mindestmenge ist eine ausreichende Detektion durch einen Sensor. Eine ausreichende Mindestmenge kann dabei bereits mit 0,1 Flächen% Abdeckung der Markierung durch Metallpartikel erreicht werden. Insbesondere in Hinblick auf die Langlebigkeit der Reflexionsfähigkeit sind jedoch größere Mengen bevorzugt. Eine Orientierung kann dabei anhand der üblicherweise verwendeten Menge an Glasperlen für den Fachmann erfolgen. Dabei stören ähnliche Mengen Glasperlen, die zusätzlich auf die Markierung gestreut werden, nicht. Trotzdem ist insgesamt natürlich darauf zu achten, dass die Flächensumme aus Glasperlen und Metallpartikeln die auf die Oberfläche gegeben werden derart kleiner als die Fläche der Markierung ist, dass der Großteil der Partikel und Perlen Kontakt zur Oberfläche des Materials bekommt. Sollten die Metallpartikel derart in die Matrix eingearbeitet werden, dass diese von der Matrix vollständig umschlossen sind, ist darauf zu achten, dass durch eine zu große Menge Partikel die Kohäsion der Matrix nicht gestört wird.
Im Falle von Klebefolien ist die Zahl der Metallkugeln analog bezüglich der Untergrenze zu betrachten. Bezüglich der Obergrenze kann eine deckende Schicht aus den Metallpartikeln durchaus gebildet werden.

Die erfindungsgemäße Lösung einer Metallpartikel enthaltender Straßenmarkierung kann auf diversen etablierten Straßenmarkierungssystemen basieren. Entscheidend für die Ausführung ist nur, dass eine Straßenmarkierung gewählt wird, in der eine ausreichende Haftung für die Metallpartikel gewährleistet wird. Grundsätzlich sind solche Straßenmarkierungen geeignet, in die Glasperlen eingearbeitet werden können. Bevorzugt handelt es sich bei den verwendbaren Straßenmarkierungen um Strukturmarkierungen, insbesondere um Kaltplastiken, Klebebänder oder Wasserfarben. Letztere insbesondere in der Ausführung als Strukturmarkierung.

Wenn es sich bei der Straßenmarkierung um ein vorgefertigtes Klebeband handelt, können die Metallpartikel analog zu den Glasperlen während der Herstellung des Klebebandes zugesetzt werden. So ist in der WO 99/04099 eine Methode beschrieben, bei der das Klebeband mit einer Haftvermittlerschicht oder mit der Schmelze eines Thermoplasten beschichtet wird und anschließend im gleichen Arbeitsgang Glasperlen auf diese noch haftende Schicht aufgestreut werden. Der Thermoplast kann dabei auch in Strukturen oder lokalen Erhebungen aufgetragen werden, so dass so eine lokale Häufung der Perlen oder ein Muster derselben erreicht wird. Dieses Verfahren ist auch einfach auf Metallpartikel analog übertragbar.
Alternativ kann auch eine Klebeschicht auf der Oberseite des Klebebands aufgebracht werden, auf die die Metallpartikel - optional zusammen mit den Glasperlen - aufgestreut werden und anschließend ausgehärtet und/oder mit einer weiteren Lack- oder Folienschicht versiegelt werden. Weiterhin ist es auch möglich die Metallpartikel bei der Herstellung einer mehrschichtigen Folie bei einer Coextrusion oder Lamination zwischen die beiden Schichten zu streuen. Weiterhin ist es insbesondere bei sehr kleinen Metallpartikeln möglich, die Metallpartikel bei der Klebebandherstellung direkt mit zu extrudieren.

Eine genauso gut zu verwendende Alternative zu Klebebändern stellen Strukturmarkierungen, die direkt auf die Fahrbahnoberfläche appliziert werden, dar. Hierbei gibt es zwei bedeutende Varianten. Zum einen kann es sich bei der Straßenmarkierung um eine Wasserfarbe handeln. Alternativ kann es sich um eine Kaltplastik handeln. Letztere wird durch Auftragen und Aushärten eines zumeist gefüllten Reaktionsharzes erhalten. Theoretisch sind auch lösungsmittelbasierte Systeme denkbar. Diese sind jedoch im Bereich der Strukturmarkierungen eher unbedeutend.

Unabhängig davon, um welche Strukturmarkierungstechnologie es sich handelt, können die Metallpartikel auf jeweils ähnliche Art und Weise in die Markierung eingearbeitet werden. Bei beiden Systemen handelt es sich in der Regel um 2K-Systeme, deren Komponenten kurz vor der Applikation miteinander vermischt werden. Dabei können auch die Metallpartikel im gleichen Verfahrensschritt eingerührt werden. Alternativ können die Metallpartikel auch in einer der Komponenten vorher enthalten sein. Mit diesem Vorgehen erhält man Straßenmarkierungen, bei denen die Metallpartikel überwiegend in der Matrix eingeschlossen sind.
Es ist jedoch auch möglich beim oder direkt nach der Applikation des wässrigen Lacks oder der Kaltplastik, die Metallpartikel aufzustreuen. Dabei erhält man eine Straßenmarkierung, die die Metallpartikel überwiegend auf der Oberfläche aufweisen. Im Falle, dass auch Glasperlen appliziert werden, kann dies in einem Arbeitsgang in Form einer Mischung oder direkt hintereinander erfolgen. Entsprechende Applikationstechnologien sind dem Fachmann aus dem Stand der Technik für die Applikation von Glasperlen bekannt.

Wie bereits ausgeführt, kann die Straßenmarkierung auf der Oberfläche zusätzlich Glasperlen aufweisen. Dies ist unabhängig davon, ob die Metallpartikel in der Matrix enthalten sind oder sich gleichfalls auf der Oberfläche befinden. Wenn die Metallpartikel auf der Oberfläche sind, tragen sie zusätzlich zur Lichtreflexion bei. Wenn die Metallpartikel in der Matrix enthalten sind, hat dies den Vorteil, dass sie langsamer im Straßenverkehr abgefahren werden und damit etwas langlebiger sind. Die oben aufgeführte Ausführungsform von transparent mit Glas, PMMA oder Polycarbonat beschichteten Metallpartikeln wird sehr bevorzugt auf der Oberfläche appliziert.

Glasperlen werden vorzugsweise in Formulierungen für Fahrbahnmarkierungen und Flächenmarkierungen als Reflexionsmittel eingesetzt. Die eingesetzten handelsüblichen Glasperlen haben Durchmesser von 10 µm bis 2000 µm, bevorzugt 50 µm bis 800 µm. Die Glasperlen können zur besseren Verarbeitung und Haftung mit einem Haftvermittler versehen werden. Bevorzugt können die Glasperlen silanisiert werden.

Im Weiteren werden beispielhaft die Zusammensetzungen von geeigneten Kaltplastiken aufgezeigt. Dies soll nur eine mögliche Ausführungsform näher beschreiben, ohne dass dadurch eine Einschränkung der vorliegenden Erfindung auf solche Systeme erfolgt. Wie bereits ausgeführt, ist eine Ausrüstung der Straßenmarkierungen auf Basis von z.B. Klebebändern oder wässrigen Systemen mit Metallpartikeln in Analogie zu der Ausrüstung mit Glasperlen für den Fachmann einfach zu realisieren.

Eine solche Kaltplastik wird gewöhnlich aus einem 2K-Reaktionsharz hergestellt. Dabei enthält eine Komponente 1,0 bis 5,0 Gew% eines Initiators, bevorzugt ein Peroxid oder einen Azoinitiator, besonders bevorzugt Dilauroylperoxid und/oder Dibenzoylperoxid. Die andere Komponente enthält 0,5 bis 5,0 Gew% eines Beschleunigers, bevorzugt eines tertiären, aromatisch substituierten Amins. Dabei kann eine der beiden Komponenten durchaus nur aus der/den genannten Verbindungen bestehen. Es ist auch möglich, dass beide Komponenten ansonsten identisch zusammengesetzt sind, oder nur eine der beiden Komponenten die Füllstoffe bzw. die Pigmente enthält.

Bevorzugt weisen die beiden Komponenten des Reaktionsharzes und damit der daraus gebildeten Kaltplastik in Summe folgende weitere Inhaltsstoffe auf:
0,1 Gew% bis 18 Gew% Vernetzer, bevorzugt di-, tri- oder multifunktionelle (Meth)acrylate,
2 Gew% bis 50 Gew% Monomere, bevorzugt (Meth)acrylate und/oder Styrol,
0 Gew% bis 12 Gew% Urethan(meth)acrylate,
0,5 Gew% bis 30 Gew% Präpolymere, bevorzugt Polymethacrylate und/oder Polyester,
0 Gew% bis 15 Gew% Kern-Schale Partikel, bevorzugt auf Poly(meth)acrylatbasis,
7 Gew% bis 15 Gew% eines anorganischen Pigments, bevorzugt Titandioxid,
30 Gew% bis 60 Gew% mineralische Füllstoffe und gegebenenfalls weitere Hilfsstoffe.

Die Formulierung Poly(meth)acrylate umfasst sowohl Polymethacrylate als auch Polyacrylate sowie Copolymere oder Mischungen aus beiden. Die Formulierung (Meth)acrylate umfasst entsprechend Methacrylate, Acrylate oder Mischungen aus beiden.

Die Zusammensetzung besonders geeigneter Kaltplastiken bzw. der diesen Kaltplastiken zugrunde gelegten Reaktionsharze können insbesondere in der WO 2012/100879 nachgelesen werden. Dort finden sich auch Angaben zu den weiteren Hilfsstoffen. Jedoch sind die in der WO 2012/100879 aufgeführten Kern-Schale Partikel kein essentielles Merkmal zur Ausführung der vorliegenden Erfindung. Stattdessen kann insbesondere der Anteil der Präpolymere höher sein.

Die mit dieser Kaltplastik hergestellten Fahrbahnmarkierungen zeigen eine besonders gute Überrollbarkeit. Unter dem Begriff Überrollbarkeit bzw. dem synonym verwendeten Begriff Wiederbefahrbarkeit wird eine Belastung der Fahrbahnmarkierung, z.B. in Form des Überrollens durch Fahrzeuge, verstanden. Die Zeitspanne bis zur Erreichung einer Überrollbarkeit ist die Zeitspanne zwischen dem Auftragen der Fahrbahnmarkierung bis zu dem Zeitpunkt, an dem keine Veränderungen in Form eines Abriebs, eines Haftungsverlusts zur Fahrbahnoberfläche bzw. zu den eingebetteten Metallpartikeln und optionalen Glaskugeln oder einer Verformung der Markierung mehr festgestellt werden kann. Die Messung der Form- und Haftungsstabilität erfolgt gemäß DIN EN 1542 99 in Einklang mit DAfStb-RiLi 01.

Bezüglich der Applikationstechnologie sind die erfindungsgemäßen Systeme flexibel einsetzbar. Die erfindungsgemäßen Reaktionsharze, bzw. Kaltplastiken können z.B. sowohl im Spritz-, im Gieß- als auch im Extrusionsverfahren bzw. manuell mittels einer Kelle, einer Rolle oder einem Rakel aufgetragen werden.

Insbesondere ist ein Verfahren zur Herstellung einer erfindungsgemäßen Straßenmarkierung Teil der vorliegenden Erfindung, das sich durch folgende Merkmale kennzeichnet: Zuerst werden, sofern nötig, die Komponenten des 2K-Systems gemischt. Diese Mischung wird auf der Straßenoberfläche aufgetragen und während oder direkt nach der Auftragung der Kaltplastik auf der Fahrbahnoberfläche werden die Metallpartikel und optional Glasperlen zugegeben. Dies erfolgt bevorzugt durch ein Aufstreuen, besonders bevorzugt in beschleunigter Form.

Beim Mischen der Komponenten ist darauf zu achten, dass nach dem Mischen der Härterkomponenten, d.h. der Initiatoren und der Beschleuniger, eine nur limitierte offene Zeit, z.B. von 2 bis 40 min, zum Applizieren verbleibt.
Ein Mischen während des Verarbeitens ist zum Beispiel in modernen Markierungsmaschinen, die über eine der Auftragsdüse vorgeschaltete Mischkammer verfügen, möglich.
Ein Einmischen des Härters nach dem Auftragen kann z.B. durch ein nachfolgendes Auftragen mit zwei oder mehr Düsen erfolgen oder durch auftragen von Metallpartikeln und/oder Glaskugeln, welche mit Härter beschichtet sind. Alternativ kann eine Grundierung - enthaltend die Härterkomponente - vorgesprüht werden bevor die Kaltplastik oder Kaltspritzplastik aufgetragen wird. Die Modernen Markierungsmaschinen verfügen in der Regel über eine oder zwei weitere Düse(n) mit der/denen dann die Metallpartikel und optional die Glasperlen aufgesprüht werden.

Bevorzugt werden die erfindungsgemäßen Reaktionsharze bzw. die daraus hergestellten Kaltplastiken zur Herstellung von langlebigen Fahrbahnmarkierungen verwendet. Gleichsam können die Systeme, insbesondere in Form eines Klebebandes für zeitlich begrenzt zu verwendende Markierungen, z.B. in einem Baustellenbereich, eingesetzt werden. Zusätzlich ist die Verwendung zur Beschichtung von Fahrradwegen denkbar.

Die im Folgenden gegebenen Beispiele werden zur besseren Veranschaulichung der vorliegenden Erfindung gegeben, sind jedoch nicht dazu geeignet, die Erfindung auf die hierin offenbarten Merkmale zu beschränken.

### Beispiele

Folgende Beispiele sind als Anleitung zur Ausführung der vorliegenden Erfindung gedacht. Sämtliche Beispiele zeigen dabei die gleichen guten Eigenschaften als Straßenmarkierung wie die zugrunde liegenden Rezepturen ohne Metallpartikel. Zusätzlich zeigen die Formulierungen der Beispiele eine gute Reflektion von Mikrowellenstrahlung mit einer Frequenz von 24 GHz.

Zur Herstellung der Beispiele wurden Aluminiumpartikel der Firma Eisenwerk Würth GmbH mit den Bezeichnungen GRANAL S-180 und GRANAL S-40 verwendet. Solche Aluminiumpartikel werden zur Verwendung als Strahlmittel vertrieben. Die Form der Partikel ist jeweils rundlich mit einer ungleichmäßigen Oberfläche. GRANAL S-180 Partikel weisen eine Größe zwischen 1,8 und 2,5 mm auf. GRANAL S-40 Partikel haben eine Größe zwischen 0,4 und 0,8 mm.

Als Glasperlen werden an der Oberfläche silanisierte Glasperlen des Typs Vialux 20 der Firma Sovitec verwendet. Diese Glasperlen haben Durchmesser in einem Bereich zwischen 600 und 1400 µm.

Das Auftragen der Metallpartikel und der Glasperlen (soweit vorhanden) auf der Oberfläche der Kaltplastik erfolgt mittels Druckpistole. Alternativ wäre ein einfaches Aufstreuen jedoch auch möglich. Letzteres würde zu einer verminderten, dennoch ausreichenden Haftung führen.

Die Rezeptur der verwendeten Kaltplastik basiert auf der in WO 2012/100879 als Beispiel 2 offenbarten Zusammensetzung. Dort kann insbesondere die Zusammensetzung der Kern-Schale-Partikel nachgelesen werden.

### Beispiel 1:

Zu 63 Teilen Methylmethacrylat und 5 Teilen Butyldiglycoldimethacrylat werden 0,05 Teile Topanol-O, 13 Teile DEGACRYL^{®} M 339, 9 Teile Kern-Schale-Schale Partikel und 0,5 Teile Paraffin innig vermengt und unter starkem Rühren auf 63°C erhitzt bis alle Polymerbestandteile gelöst bzw. dispergiert sind. Zur Härtung werden 1 Teil Benzoylperoxid (50 Gew%ige Formulierung in Dioctylphthalat) und 2 Teile N,N-Diisopropoxytoluidin zugegeben und für eine Minute bei Raumtemperatur (21°C) eingerührt.
Zum Aushärten wurde die Masse auf ein Metallblech gegossen. Innerhalb von einer Minute nach dem Ausgießen wird die Oberfläche mit GRANAL S-180 Partikeln bestreut. Dabei wird eine Menge verwendet, die 280 g Partikel / m² entspricht. Nach dem erfolgten Aushärten erfolgt die Herstellung von Probenkörpern nach DIN 50125.
Topfzeit: 14 min; Härtezeit: 30 min; Auslaufzeit (4 mm): 252 sec

### Beispiel 2:

Wie Beispiel 1, nur dass anstelle von GRANAL S-180 GRANAL S-40 in entsprechenden Mengen eingesetzt wird.

### Beispiel 3:

Wie Beispiel 1, nur dass zusätzlich und aus einer vorgefertigten Mischung mit den GRANAL S-180 Partikeln Glasperlen in einer Menge, die 280 g / m² entspricht aufgestreut werden.

### Beispiel 4:

Wie Beispiel 3, nur dass die GRANAL S-180 Partikel zusammen mit den Kern-Schale-Partikeln in die Zusammensetzung eingerührt werden und nach dem Ausgießen nur mit Glasperlen bestreut wird.

### Vergleichsbeispiel

Wie Beispiel 4, jedoch ohne Aluminiumpartikel.

Der Radarrückstreuquerschnitt (RCS) der Markierungsproben wurde an einer Markierung mit der Größe 10x10 cm gemessen. Die Messung wurde orthogonal zur Applikationsfläche mit einem 76 GHz Radarsensor durchgeführt.

Ergebnisse:
Beispiel 1: Der ermittelte Radarrückstreuquerschnitt liegt bei 0,0029 m².
Beispiel 2: RCS = 0,0013 m²
Beispiel 3: RCS = 0,0021 m²
Beispiel 4: RCS = 0,0014 m²
Vergleichsbeispiel: RCS = 0,00021 m²
Die Beispiele zeigen bei einer beispielhaften Wellenlänge von 76 GHz eine gegenüber dem Vergleichsbeispiel mit einer nicht mit Metalpartikeln ausgestatten analogen Markierung um einen Faktor von mindestens 60 verstärkte Reflektion.

## Patentansprüche

1. Strahlenreflektierende Straßenmarkierung, **dadurch gekennzeichnet, dass** die Straßenmarkierung Metallpartikel mit einem Durchmesser zwischen 10 µm und 1 cm aufweist, und dass es sich bei den Metallpartikeln um Partikel handelt, die ganz oder teilweise aus Aluminium, Magnesium, Zink oder einer Legierung, die überwiegend Aluminium, Magnesium oder Zink enthält, bestehen.

2. Straßenmarkierung gemäß Anspruch 1, **dadurch gekennzeichnet, dass** die Metallpartikel ganz aus dem Metall bestehen, die Oberfläche mit dem Metall beschichtet ist oder es sich um ein mit Glas, PMMA oder Polycarbonat beschichtetes Metall handelt.

3. Straßenmarkierung gemäß mindestens einem der Ansprüche 1 oder 2, **dadurch gekennzeichnet, dass** die Metallpartikel kugelförmig, oval, rundlich oder tripelspiegelförmig sind oder als Flakes vorliegen.

4. Straßenmarkierung gemäß mindestens einem der Ansprüche 1 bis 3, **dadurch gekennzeichnet, dass** die Metallpartikel auf der Oberfläche mit einem Haftvermittler versehen sind.

5. Straßenmarkierung gemäß mindestens einem der Ansprüche 1 bis 4, **dadurch gekennzeichnet, dass** das Matrixmaterial der Straßenmarkierung einen Haftvermittler enthält.

6. Straßenmarkierung gemäß mindestens einem der Ansprüche 4 oder 5, **dadurch gekennzeichnet, dass** es sich bei dem Haftvermittler um mindestens einen Haftvermittler, ausgewählt aus der Gruppe Silane, Hydroxyester, Aminoester, Urethane, Isocyanate und/oder mit (Meth)acrylaten copolymerisierbare Säuren handelt.

7. Straßenmarkierung gemäß mindestens einem der Ansprüche 1 bis 6, **dadurch gekennzeichnet, dass** es sich bei der Straßenmarkierung um ein vorgefertigtes Klebeband handelt.

8. Straßenmarkierung gemäß mindestens einem der Ansprüche 1 bis 6, **dadurch gekennzeichnet, dass** es sich bei der Straßenmarkierung um eine Wasserfarbe handelt.

9. Straßenmarkierung gemäß mindestens einem der Ansprüche 1 bis 6, **dadurch gekennzeichnet, dass** es sich bei der Straßenmarkierung um eine Kaltplastik handelt.

10. Straßenmarkierung gemäß mindestens einem der Ansprüche 1 bis 9, **dadurch gekennzeichnet, dass** die Straßenmarkierung auf der Oberfläche zusätzlich Glasperlen aufweist.

11. Straßenmarkierung gemäß mindestens einem der Ansprüche 1 bis 10, **dadurch gekennzeichnet, dass** sich die Metallpartikel auf der Oberfläche der Straßenmarkierung befinden.

12. Straßenmarkierung gemäß mindestens einem der Ansprüche 1 bis 11, **dadurch gekennzeichnet, dass** die Metallpartikel einen Durchmesser zwischen 0,5 mm und 2,5 mm aufweisen.

13. Straßenmarkierung gemäß Anspruch 9, **dadurch gekennzeichnet, dass** die Kaltplastik aus einem 2K-Reaktionsharz hergestellt wurde, wobei eine Komponente 1,0 bis 5,0 Gew% eines Initiators, bevorzugt Dilauroylperoxid und/oder Dibenzoylperoxid, und die andere Komponente 0,5 bis 5,0 Gew% eines Beschleunigers, bevorzugt eines tertiären, aromatisch substituierten Amins enthält, und dass das Reaktionsharz in Summe folgende weitere Inhaltsstoffe aufweist:
0,1 Gew% bis 18 Gew% Vernetzer,
2 Gew% bis 50 Gew% Monomere,
0 Gew% bis 12 Gew% Urethan(meth)acrylate,
0,5 Gew% bis 30 Gew% Präpolymere,
0 Gew% bis 15 Gew% Kern-Schale Partikel,
7 Gew% bis 15 Gew% eines anorganischen Pigments, bevorzugt Titandioxid,
30 Gew% bis 60 Gew% mineralische Füllstoffe und gegebenenfalls weitere Hilfsstoffe.

14. Straßenmarkierung gemäß mindestens einem der Ansprüche 1 bis 13, **dadurch gekennzeichnet, dass** die Straßenmarkierung Mikrowellen und/oder Infrarotstrahlung reflektiert.

15. Verfahren zur Herstellung einer Straßenmarkierung gemäß Anspruch 8 oder 9, **dadurch gekennzeichnet, dass**, sofern nötig, 2K-Systeme gemischt werden, die Mischung auf der Straßenoberfläche aufgetragen wird und während oder direkt nach der Auftragung der Kaltplastik auf der Fahrbahnoberfläche die Metallpartikel und optional Glaskugeln zugegeben werden.

## Claims

1. Radiation-reflecting road marking, **characterized in that** the road marking comprises metal particles having a diameter of between 10 µm and 1 cm, and **in that** the metal particles are particles consisting wholly or partly of aluminium, magnesium or zinc or of an alloy predominantly containing aluminium, magnesium or zinc.

2. Road marking according to Claim 1, **characterized in that** the metal particles consist wholly of the metal, the surface is coated with the metal, or the metal is coated with glass, PMMA or polycarbonate.

3. Road marking according to at least one of Claims 1 or 2, **characterized in that** the metal particles are spherical, oval, rounded or of triple mirror format or are in the form of flakes.

4. Road marking according to at least one of Claims 1 to 3, **characterized in that** the metal particles are provided on the surface with an adhesion promoter.

5. Road marking according to at least one of Claims 1 to 4, **characterized in that** the matrix material of the road marking comprises an adhesion promoter.

6. Road marking according to at least one of Claims 4 and 5, **characterized in that** the adhesion promoter is at least one adhesion promoter selected from the group of silanes, hydroxyesters, aminoesters, urethanes, isocyanates and/or acids copolymerizable with (meth)acrylates.

7. Road marking according to at least one of Claims 1 to 6, **characterized in that** the road marking is a prefabricated adhesive tape.

8. Road marking according to at least one of Claims 1 to 6, **characterized in that** the road marking is a water-based paint.

9. Road marking according to at least one of Claims 1 to 6, **characterized in that** the road marking is a cold plastic.

10. Road marking according to at least one of Claims 1 to 9, **characterized in that** the road marking additionally has glass beads on the surface.

11. Road marking according to at least one of Claims 1 to 10, **characterized in that** the metal particles are situated on the surface of the road marking.

12. Road marking according to at least one of Claims 1 to 11, **characterized in that** the metal particles have a diameter of between 0.5 mm and 2.5 mm.

13. Road marking according to Claim 9, **characterized in that** the cold plastic has been produced from a two-part reactive resin in which one component comprises 1.0 to 5.0 wt% of an initiator, preferably dilauroyl peroxide and/or dibenzoyl peroxide, and the other component comprises 0.5 to 5.0 wt% of an accelerator, preferably a tertiary, aromatically substituted amine, and **in that** the reactive resin has in total the following further ingredients:
0.1 wt% to 18 wt% of crosslinkers,
2 wt% to 50 wt% of monomers,
0 wt% to 12 wt% of urethane (meth)acrylates,
0.5 wt% to 30 wt% of prepolymers,
0 wt% to 15 wt% of core-shell particles,
7 wt% to 15 wt% of an inorganic pigment, preferably titanium dioxide,
30 wt% to 60 wt% of mineral fillers, and
optionally further auxiliaries.

14. Road marking according to at least one of Claims 1 to 13, **characterized in that** the road marking reflects microwaves and/or infrared radiation.

15. Method for producing a road marking according to Claim 8 or 9, **characterized in that**, where necessary, two-part systems are mixed, the mixture is applied to the road surface and the metal particles and optionally glass beads are added during or directly after the application of the cold plastic to the trafficway surface.

## Revendications

1. Marquage routier réfléchissant, **caractérisé en ce que** le marquage routier présente des particules métalliques d'un diamètre entre 10 µm et 1 cm, et **en ce que** les particules métalliques sont des particules constituées en tout ou partie d'aluminium, de magnésium, de zinc ou d'un alliage contenant principalement de l'aluminium, du magnésium ou du zinc.

2. Marquage routier selon la revendication 1, **caractérisé en ce que** les particules métalliques sont entièrement en métal, leur surface est recouverte du métal ou est constituée de métal recouvert de verre, de PMMA ou de polycarbonate.

3. Marquage routier selon la revendication 1 ou 2, **caractérisé en ce que** les particules métalliques sont sphériques, ovales, arrondies ou prismatiques, ou sont en forme de flocons.

4. Marquage routier selon au moins une des revendications 1 à 3, **caractérisé en ce que** les particules métalliques comportent un agent d'adhérence à leur surface.

5. Marquage routier selon au moins une des revendications 1 à 4, **caractérisé en ce que** le matériau matrice du marquage routier contient un agent d'adhérence.

6. Marquage routier selon au moins une des revendications 4 ou 5, **caractérisé en ce que** l'agent d'adhérence est choisi dans le groupe constitué d'un silane, d'un hydroxyester, d'un aminoester, d'un uréthane, d'un isocyanate et/ou d'acides copolymérisables avec des (méth)acrylates.

7. Marquage routier selon au moins une des revendications 1 à 6, **caractérisé en ce que** le marquage routier est une bande adhésive préfabriquée.

8. Marquage routier selon au moins une des revendications 1 à 6, **caractérisé en ce que** le marquage routier est une peinture à l'eau.

9. Marquage routier selon au moins une des revendications 1 à 6, **caractérisé en ce que** le marquage routier est un plastique à froid.

10. Marquage routier selon au moins une des revendications 1 à 9, **caractérisé en ce que** le marquage routier présente en plus à sa surface des perles de verre.

11. Marquage routier selon au moins une des revendications 1 à 10, **caractérisé en ce que** les particules métalliques se trouvent à la surface du marquage routier.

12. Marquage routier selon au moins une des revendications 1 à 10, **caractérisé en ce que** les particules métalliques présentent un diamètre entre 0,5 mm et 2,5 mm.

13. Marquage routier selon la revendication 9, **caractérisé en ce que** le plastique à froid a été fabriqué à partir d'une résine bicomposante, un composant contenant 1,0 à 5,0 % en poids d'un initiateur, préférentiellement du peroxyde de dilauroyle et/ou du peroxyde de dibenzoyle, et l'autre composant contenant 0,5 à 5,0 % en poids d'un catalyseur, préférentiellement une amine tertiaire à substituts aromatiques, et **en ce que** la résine présente au total les autres ingrédients suivants :
0,1 % à 18 % en poids d'agents réticulants,
2 % à 50 % en poids de monomères,
0 % à 12 % en poids d'uréthane (méth)acrylate,
0,5 % à 30 % en poids de prépolymères,
0 % à 15 % en poids de particules de type coeur/graine,
7 % à 15 % en poids d'un pigment minéral, préférentiellement du dioxyde de titane,
30 % à 60 % en poids de charges minérales et éventuellement d'autres additifs.

14. Marquage routier selon au moins une des revendications 1 à 13, **caractérisé en ce que** le marquage routier réfléchit les micro-ondes et/ou le rayonnement infrarouge.

15. Procédé de fabrication d'un marquage routier selon la revendication 8 ou 9, **caractérisé en ce que**, si nécessaire, on mélange un système bicomposant, on applique le mélange sur la surface de la route, et pendant ou immédiatement après application, on ajoute au plastique à froid sur la surface de la route les particules métalliques et, facultativement, des billes de verre.
